# EUROPÄISCHE PATENTANMELDUNG

(11) **EP 4 825 157 A1**
(43) Veröffentlichungstag der Anmeldung: **21.10.2026**
(21) Anmeldenummer: 25171193.3
(22) Anmeldetag: 17.04.2025
(51) Int. Cl.: A01D 41/14, A01D 43/08, A01D 45/02

(54) **ZWISCHEN BETRIEBS- UND TRANSPORTSTELLUNG SCHWENKBARER ERNTEVORSATZ**

(71) Anmelder: Deere & Company, Moline, IL 61265 (US)
(72) Erfinder: WEITENBERG, CLEMENS, 68163 Mannheim (DE); SCHILD, JAN-DIRK, 68163 Mannheim (DE)
(74) Vertreter: Holst, Sönke

(57) **Zusammenfassung**

Ein Erntevorsatz (12) für eine selbstfahrende Erntemaschine (10) umfasst:
einen Mittelteil (20) mit einem Rahmen (32), an dem mindestens eine Erntegutaufnahmeeinrichtung (40) befestigt ist und der an einem Einzugsförderer (18) einer selbstfahrenden Erntemaschine (10) anbringbar und in einer Vorwärtsbewegungsrichtung (V) über ein Feld bewegbar ist,
an beiden Seiten des Mittelteils (20) angeordnete, innere Seitenteile (22, 24) mit jeweils einem Rahmen (34, 36), an dem je mindestens eine Erntegutaufnahmeeinrichtung (38, 42) befestigt ist und der am Rahmen (32) des Mittelteils (20) um eine sich in Vorwärtsrichtung (V) erstreckende Achse (46, 48) zwischen einer horizontalen Betriebsstellung und einer angehobenen Transportstellung verschwenkbar gelagert ist, und
jeweils an beiden Seiten der inneren Seitenteile (22, 24) angeordnete, äußere Seitenteile (52, 54) mit jeweils einem Rahmen (64, 66), an dem mindestens eine Erntegutaufnahmeeinrichtung (56, 58) befestigt ist und der am Rahmen (34, 36) des inneren Seitenteils (22, 24) um eine sich in der Betriebsstellung vertikal erstreckende Achse (68, 70) zwischen einer Betriebsstellung und einer Transportstellung verschwenkbar gelagert ist, in welcher die äußeren Seitenteile (52, 54) rückwärtig der inneren Seitenteile (22, 24) angeordnet sind.

## Beschreibung

Die Erfindung betrifft einen Erntevorsatz für eine selbstfahrende Erntemaschine, umfassend:
einen Mittelteil mit einem Rahmen, an dem mindestens eine Erntegutaufnahmeeinrichtung befestigt ist und der an einem Einzugsförderer einer selbstfahrenden Erntemaschine anbringbar und in einer Vorwärtsbewegungsrichtung über ein Feld bewegbar ist,
an beiden Seiten des Mittelteils angeordnete, innere Seitenteile mit jeweils einem Rahmen, an dem je mindestens eine Erntegutaufnahmeeinrichtung befestigt ist und der am Rahmen des Mittelteils um eine sich in Vorwärtsrichtung erstreckende Achse zwischen einer horizontalen Betriebsstellung und einer angehobenen Transportstellung verschwenkbar gelagert ist, und
jeweils an beiden Seiten der inneren Seitenteile angeordnete, äußere Seitenteile mit jeweils einem Rahmen, an dem mindestens eine Erntegutaufnahmeeinrichtung befestigt ist und der am Rahmen des inneren Seitenteils um eine sich in der Betriebsstellung vertikal erstreckende Achse zwischen einer Betriebsstellung und einer Transportstellung verschwenkbar gelagert ist.

### Stand der Technik

Während von der Landmaschinenindustrie derzeit immer breitere Erntevorsätze für selbstfahrende Erntemaschinen angeboten werden, die es dem Landwirt ermöglichen, ein Feld in kürzerer Zeit und mit weniger Überfahrungen abzuernten, ist die maximale Breite von Fahrzeugen beim Befahren einer Straße gesetzlich beschränkt. Die Erntevorsätze werden deshalb in der Regel auf einem Anhänger transportiert oder in eine Transportstellung eingeklappt, in der ihre Breite gegenüber ihrer Betriebsposition vermindert ist. Das Einklappen hat den Vorteil, dass ein Abnehmen und Wiederanbringen des Erntevorsatzes von bzw. an der Erntemaschine entfällt.

In der DE 41 31 491 A1 wird ein Maiserntegerät für Feldhäcksler beschrieben, bei dem die Außenteile um horizontale, in Fahrtrichtung verlaufende Achsen hochklappbar sind und über den Mittelteil des Maiserntegeräts gelegt werden. Dieses Konzept findet sich relativ häufig, vgl. beispielsweise EP 0 491 405 A1 und EP 2 446 729 A1 für Maispflücker. Bei derartigen Erntevorsätzen ist als nachteilig anzusehen, dass ihr Schwerpunkt beim Transport relativ weit vorn liegt, was analog auch für den Erntevorsatz nach der als gattungsbildend angesehenen EP 1 305 995 A1 mit inneren, um 90° um die in Vorwärtsrichtung verlaufende Achse nach oben verschwenkten, inneren Seitenteilen und gegenüber den äußeren Seitenteilen um die Hochachse um 90° nach vorn geschwenkten, äußeren Seitenteilen gilt. Die Lage des Schwerpunkts wird durch das Einklappen der Erntegutaufnahmeeinrichtungen der Erntevorsätze in die Transportposition nicht verändert oder im Fall von EP 1 305 995 A1 sogar noch verschlechtert. Aus diesem Grund entstehen beim Straßentransport nachteilige hohe Belastungen der Vorderräder der den Erntevorsatz tragenden Erntemaschine. Dieses Problem wird in der EP 1 287 732 A1 vermieden, indem der gesamte Erntevorsatz um die Querachse nach hinten und oben gedreht und anschließend die äußeren Reiheneinheiten um in Vorwärtsrichtung verlaufende Achsen geschwenkt und über die Mitte gelegt werden.

### Problem

Jedoch ist die durch einfaches Verschwenken von Außenteilen erzielbare Arbeitsbreite begrenzt, denn bei Maiserntegeräten lassen sich bei derzeitigen Regelungen mit einer Straßenfahrbreite von 3 m und Reihenabständen von 0,75 m maximal jeweils zwei Reiheneinheiten auf jeder Seite nach oben schwenken, damit der Fahrer noch hinreichend Sicht auf die Straße hat. Es lassen sich somit mit den bekannten Konzepten maximal acht Reiheneinheiten in klappbarer Weise realisieren, denn ein Stapeln von drei Reiheneinheiten übereinander, wie bei Maismähvorsätzen für Feldhäcksler, s. WO 2006/079609 A1, ist bei Pflückern aus räumlichen Gründen nicht möglich. Zudem liegt der oben diskutierte Nachteil der ungünstigen Schwerpunktlage vor.

Die der Erfindung zugrunde liegende Aufgabe wird darin gesehen, einen verbesserten Erntevorsatz bereitzustellen, bei dem die besagten Probleme hinsichtlich erzielbarer Arbeitsbreite und Gewichtsverteilung in der Transportstellung nicht oder in vermindertem Maße vorliegen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntevorsatz für eine selbstfahrende Erntemaschine umfasst einen Mittelteil mit einem Rahmen, an dem mindestens eine Erntegutaufnahmeeinrichtung befestigt ist und der an einem Einzugsförderer einer selbstfahrenden Erntemaschine anbringbar und in einer Vorwärtsbewegungsrichtung über ein Feld bewegbar ist, an beiden Seiten des Mittelteils angeordnete, innere Seitenteile mit jeweils einem Rahmen, an dem je mindestens eine Erntegutaufnahmeeinrichtung befestigt ist und der am Rahmen des Mittelteils um eine sich in Vorwärtsrichtung erstreckende Achse zwischen einer horizontalen Betriebsstellung und einer angehobenen Transportstellung verschwenkbar gelagert ist, und jeweils an beiden Seiten der inneren Seitenteile angeordnete, äußere Seitenteile mit jeweils einem Rahmen, an dem mindestens eine Erntegutaufnahmeeinrichtung befestigt ist und der am Rahmen des inneren Seitenteils um eine sich in der Betriebsstellung vertikal erstreckende Achse zwischen einer Betriebsstellung und einer Transportstellung verschwenkbar gelagert ist, in welcher die äußeren Seitenteile rückwärtig der inneren Seitenteile angeordnet sind.

Es sind mit anderen Worten auf jeder Seite des Mittelteils innere und äußere Seitenteile angeordnet, die jeweils einen Rahmen und eine oder mehrere daran angebrachte Erntegutvorrichtungen aufweisen, sowie ggf. Mittel zur Querförderung des aufgenommenen Ernteguts. Die Rahmen sind untereinander um Achsen schwenkbar verbunden; die Schwenkbewegung um diese Achsen erfolgt in der Regel durch fremdkraftbetätigte Aktoren, obwohl auch Anwendungsfälle mit von Hand betätigten Bewegungen denkbar wären. Der Mittelteil und die alle Seitenteile und ihre Rahmen und Erntegutaufnahmeeinrichtungen liegen in an sich bekannter Weise in der Betriebsstellung auf einer gemeinsamen, quer zur Vorwärtsrichtung verlaufenden Geraden und in einer gemeinsamen Ebene, um das Erntegut aufzunehmen, ggf. zu bearbeiten (im Falle eines Maispflückers die Kolben abzutrennen) und in den Einzugskanal bzw. Schrägförderer einer den Erntevorsatz tragenden und in der Vorwärtsrichtung über das Feld bewegenden Erntemaschine, insbesondere eines Mähdreschers oder Feldhäckslers zu fördern. Die Rahmen der inneren Seitenteile werden um eine sich in Vorwärtsrichtung erstreckende Achse um 90° oder 180° (oder einen dazwischen liegenden Winkel) gegenüber dem Rahmen des Mittelteils nach oben und ggf. innen in die Transportstellung verschwenkt. Die Rahmen der äußeren Seitenteile werden, in der Regel zuvor, um eine sich in der Betriebsstellung vertikal erstreckende Achse verschwenkt und dabei gegenüber den Seitenteilen bezüglich der Vorwärtsrichtung nach hinten gedreht.

Es finden somit auf jeder Seite des Mittelteils zwei Schwenkbewegungen zwischen Betriebs- und Transportstellung statt, was eine kompakte Konfiguration des Erntevorsatzes in der Transportstellung bei größeren Arbeitsbreiten als nur einer einzigen Schwenkbewegung ermöglicht, ohne zwei Seitenteile übereinander zu legen. Die Schwenkbewegung der äußeren Seitenteile aus der Betriebs- in die Transportstellung liegt in der Regel zeitlich vor der Schwenkbewegung der inneren Seitenteile aus der Betriebs- in die Transportstellung, insbesondere um unerwünschte Kollisionen mit der Erntemaschine zu vermeiden. Hier kann eine übliche zeit- oder positionsabhängige Steuerung vorgesehen sein, vgl. WO 2006/079609 A1. Durch die Verschwenkung der äußeren Seitenteile nach hinten erhält man zudem eine günstige Gewichtsverteilung mit einem relativ weit hinten liegenden Massenschwerpunkt des Erntevorsatzes.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf eine Erntemaschine mit einem erfindungsgemäßen Erntevorsatz in seiner Betriebsstellung,
- Fig. 2: eine Draufsicht auf die Erntemaschine der Figur 1 mit in eine Zwischenstellung verbrachtem Erntevorsatz, und
- Fig. 3: eine Draufsicht auf die Erntemaschine der Figur 1 mit in eine Transportstellung verbrachtem Erntevorsatz.

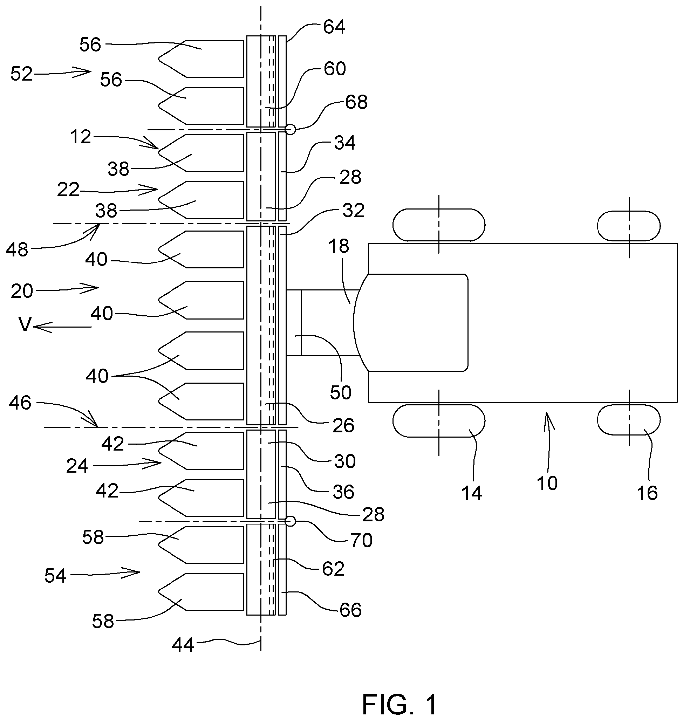

In Figur 1 ist eine selbstfahrende Erntemaschine 10 in Form eines Mähdreschers dargestellt. Sie stützt sich durch vordere, angetriebene Räder 14 und hintere, lenkbare Räder 16 auf einem Feld ab. An der Vorderseite der Erntemaschine 10 befindet sich ein Schrägförderer 18, der einen Erntevorsatz 12 in Form eines Maispflückers trägt. Die Erntemaschine 10 ist eingerichtet, den Erntevorsatz 12 in einer Vorwärtsbewegungsrichtung V über ein abzuerntendes Feld zu bewegen.

Der Erntevorsatz 12 setzt sich aus einem Mittelteil 20 und bezüglich der Vorwärtsbewegungsrichtung V auf beiden Seiten des Mittelteils 20 angeordneten, inneren Seitenteilen 22, 24 sowie auf beiden Seiten der inneren Seitenteile 22, 24 angeordneten, äußeren Seitenteilen 52, 54 zusammen. Der Mittelteil 20 ist an einem Pendelschild 50, der an der Vorderseite des Schrägförderers 18 angebracht ist, aufgehängt. Der Mittelteil 20 weist als Erntegutaufnahmeeinrichtungen 40 vier seitlich nebeneinander angeordnete Reiheneinheiten mit Einzugs- und Pflückvorrichtungen auf, die in an sich bekannter Weise mit Einzugsketten und Pflückwalzen ausgestattet sein können. Denkbar wäre auch die Verwendung von reihenunabhängig arbeitenden Einzugs- und Pflückvorrichtungen, wie sie in der DE 100 28 887 A1 beschrieben sind, oder von Reiheneinheiten, welche die Pflanzenstängel in einen quer orientierten Pflückspalt einführen, vgl. EP 4 070 642 A1. Die Art der Erntegutaufnahmeeinrichtungen 40 ist im Rahmen des erfindungsgemäßen Gedankens beliebig, so dass es sich bei ihnen auch um Baumwollpflückeinrichtungen, Schneid- und Fördertrommeln von Maismähvorsätzen, Aufsammelrechen von Pick-ups oder beliebige andere Ernteeinrichtungen handeln könnte. An der Rückseite der Erntegutaufnahmeeinrichtungen 40 des Mittelteils 20 ist eine Querförderschnecke 26 angeordnet. Der Mittelteil 20 wird durch einen am Pendelschild 50 abgestützten, starren Rahmen 32 getragen. Der Rahmen 32 weist an seinen (quer zur Vorwärtsbewegungsrichtung V betrachtet) äußeren Enden Elemente (Konsolen o. ä.) auf, an denen die beiden Enden der Querförderschnecke 26 abgestützt sind. Der erste Rahmen 32 haltert die Querförderschnecke 26 teilweise umschließende Wannen, die im Zusammenwirken mit der Querförderschnecke eine Gutförderung in den Schrägförderer 18 der Erntemaschine 10 ermöglichen.

Die auf beiden Seiten des Mittelteils 20 angeordneten, inneren Seitenteile 22, 24 weisen jeweils zwei Erntegutaufnahmeeinrichtungen 38 bzw. 42 auf, die in der Regel mit den Erntegutaufnahmeeinrichtungen 40 gleichartig sind. An ihrer Rückseite ist jeweils eine Querförderschnecke 28 bzw. 30 angeordnet, die beide zur Querförderschnecke 26 koaxial verlaufen. Die Seitenteile 22, 24 stützen sich auf rückseitig angeordneten Rahmen 34, 36 ab. Die Rahmen 34 und 36 sind mit Elementen (insbesondere Konsolen) versehen, welche jeweils eines oder beide Enden der Querförderschnecken 28 und 30 drehbar abstützen. Auch sind zur Gutförderung Wannen mit den Rahmen 34, 36 verbunden, die den Unter- und Rückseiten der Querförderschnecken 28 und 30 benachbart sind.

Die auf beiden Seiten der inneren Seitenteile 22, 24 angeordneten, äußeren Seitenteile 52, 54 weisen jeweils zwei Erntegutaufnahmeeinrichtungen 56 bzw. 58 auf, die in der Regel mit den Erntegutaufnahmeeinrichtungen 40 gleichartig sind. An ihrer Rückseite ist jeweils eine Querförderschnecke 60 bzw. 62 angeordnet, die beide zur Querförderschnecke 26 koaxial verlaufen. Die äußeren Seitenteile 52, 54 stützen sich auf rückseitig angeordneten Rahmen 64, 66 ab. Die Rahmen 64 und 66 sind mit Elementen (insbesondere Konsolen) versehen, welche jeweils eines oder beide Enden der Querförderschnecken 60 und 62 drehbar abstützen. Auch sind zur Gutförderung Wannen mit den Rahmen 64, 66 verbunden, die den Unter- und Rückseiten der Querförderschnecken 60 und 62 benachbart sind.

Die Querförderschnecken 26, 28, 30, 60 und 62 sind um eine gemeinsame Achse 44 antreibbar drehbar und untereinander durch Drehmoment übertragende Kupplungen lösbar verbunden. Auch die Erntegutaufnahmeeinrichtungen 38, 40, 42, 56, 58 sind antreibbar, wobei der Antrieb, wie auch der für die Querförderschnecken 26, 28, 30, 60 und 62 vom Schrägförderer 18 der Erntemaschine 10 her erfolgt. In der Betriebsstellung stützen sich die Rahmen 34, 36 der inneren Seitenteile 22, 24 am Rahmen 32 des Mittelteils 20 ab und die Rahmen 64, 66 der äußeren Seitenteile 52, 54 stützen sich am Rahmen 34, 36 der inneren Seitenteile 22, 24 ab.

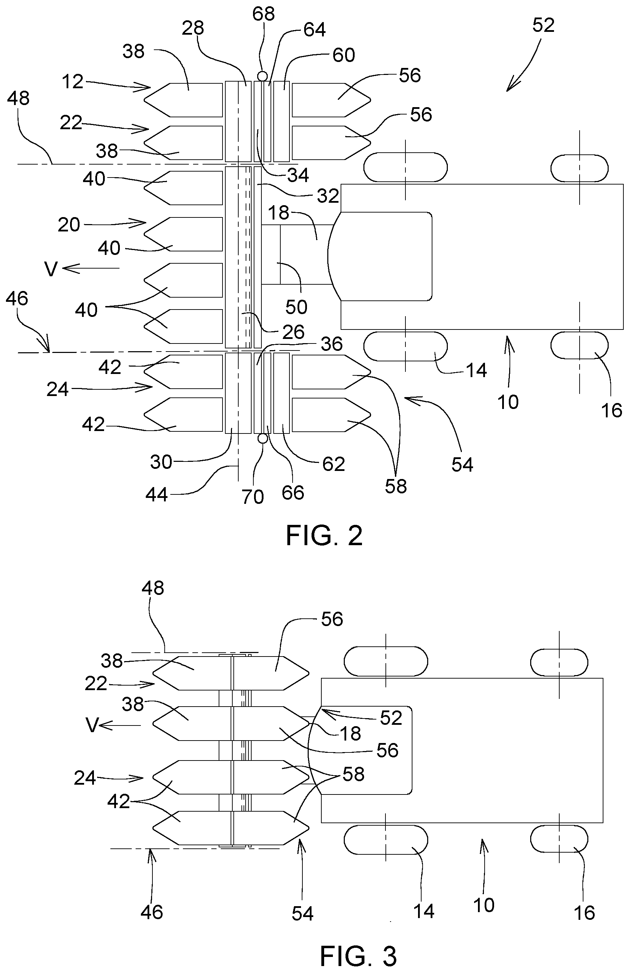

Die Rahmen 64, 66 der äußeren Seitenteile 52 und 54 sind um vertikal verlaufende Achsen 68, 70 an den Rahmen 34, 36 der inneren Seitenteile 22, 24 angelenkt und durch nicht gezeigte Aktoren um diese Achsen 68, 70 um 180° drehbar, sodass die äußeren Seitenteile 52, 54 einem Zwischenschritt beim Einfalten des Erntevorsatzes 10 aus der Betriebsstellung gemäß Figur 1 um die Achsen 68, 70 nach hinten in eine Zwischenstellung geschwenkt werden. In der Zwischenstellung, die in der Figur 2 gezeigt wird, befinden sich die äußeren Seitenteile 52, 54 demnach rückwärtig der inneren Seitenteile 22, 24.

Die Rahmen 34, 36 der inneren Seitenteile 22, 24 sind um in Vorwärtsrichtung V verlaufende Achsen 46, 48 an dem Rahmen 32 des Mittelteils 20 angelenkt und durch nicht gezeigte Aktoren um diese Achsen 46, 48 um 180° drehbar, sodass die inneren Seitenteile 22, 24 und mit ihnen die äußeren Seitenteile 52, 54 einem folgenden Schritt beim Einfalten des Erntevorsatzes 10 aus der Zwischenstellung gemäß Figur 2 um die Achsen 46, 48 nach oben geschwenkt und auf den Mittelteil 20 gelegt werden. In der Transportstellung, die in der Figur 3 gezeigt wird, liegen die inneren Seitenteile 22, 24 auf dem Mittelteil und die äußeren Seitenteile 52, 54 liegen rückwärtig der inneren Seitenteile 22, 24 auf dem Schrägförderer 18.

Es ist nach alledem erkennbar, dass der dargestellte Schwenkmechanismus mit den vertikalen Achsen 68, 70 zwischen den äußeren Seitenteilen 52, 54 und den inneren Seitenteilen 22, 24 und den in Vorwärtsrichtung V verlaufenden Achsen 46, 48 zwischen den inneren Seitenteilen 22, 24 und dem Mittelteil 20 und den Drehungen von jeweils 180° es ermöglicht, die Breite des Mittelteils 20 zu verdreifachen, da die Seitenteile 22, 24, 52, 54 jeweils näherungsweise die Hälfte der Breite des Mittelteils 20 aufweisen. Bei einer zulässigen Breite des Mittelteils von 3 m kann insgesamt eine Arbeitsbreite von 9 m abgedeckt werden. Bei dem gezeigten Maispflücker können demnach maximal zwölf Reiheneinheiten als Erntegutaufnahmeeinrichtungen 38, 40, 42, 56, 58 an einem Erntevorsatz 10 montiert werden. Es wäre auch denkbar, jeweils die äußersten Erntegutaufnahmeeinrichtungen 56, 58 der äußeren Seitenteile 52, 54 wegzulassen, um nur zehn Reiheneinheiten als Erntegutaufnahmeeinrichtungen 38, 40, 42, 56, 58 am Erntevorsatz 10 anzubringen.

Neben der großen Arbeitsbreite liegt ein weiterer Vorteil des Erntevorsatzes 10 darin, dass man eine günstige Gewichtsverteilung erhält, denn die äußeren Seitenteile 52, 54 sind in der Transportposition relativ weit hinten, nämlich rückwärtig der inneren Seitenteile 22, 24, positioniert. Dadurch erhält man eine geringere Belastung der Vorderräder 14 der Erntemaschine 10, als wenn die äußeren Seitenteile 52, 54 über die inneren Seitenteile 22, 24 gelegt (d.h.um sich in Vorwärtsrichtung V erstreckende Achsen geschwenkt) würden.

In der dargestellten Ausführungsform werden die inneren Seitenteile 22, 24 gegenüber dem Mittelteil 20 um 180° nach oben und innen geschwenkt. Es wäre auch denkbar, hier nur eine Schwenkbewegung um 90° vorzusehen, sodass alle Seitenteile 22, 24, 52, 54 in der Transportstellung senkrecht stehen, oder einen zwischen 90° und 180° liegenden Winkel zu verwenden. Das hätte einerseits Vorteile für das Sichtfeld des Fahrers der Erntemaschine 10, andererseits aber einen höheren Schwerpunkt des Erntevorsatzes 10 gegenüber der dargestellten Ausführungsform zur Folge.

## Patentansprüche

1. Erntevorsatz (12) für eine selbstfahrende Erntemaschine (10), umfassend:
einen Mittelteil (20) mit einem Rahmen (32), an dem mindestens eine Erntegutaufnahmeeinrichtung (40) befestigt ist und der an einem Einzugsförderer (18) einer selbstfahrenden Erntemaschine (10) anbringbar und in einer Vorwärtsbewegungsrichtung (V) über ein Feld bewegbar ist,
an beiden Seiten des Mittelteils (20) angeordnete, innere Seitenteile (22, 24) mit jeweils einem Rahmen (34, 36), an dem je mindestens eine Erntegutaufnahmeeinrichtung (38, 42) befestigt ist und der am Rahmen (32) des Mittelteils (20) um eine sich in Vorwärtsrichtung (V) erstreckende Achse (46, 48) zwischen einer horizontalen Betriebsstellung und einer angehobenen Transportstellung verschwenkbar gelagert ist, und
jeweils an beiden Seiten der inneren Seitenteile (22, 24) angeordnete, äußere Seitenteile (52, 54) mit jeweils einem Rahmen (64, 66), an dem mindestens eine Erntegutaufnahmeeinrichtung (56, 58) befestigt ist und der am Rahmen (34, 36) des inneren Seitenteils (22, 24) um eine sich in der Betriebsstellung vertikal erstreckende Achse (68, 70) zwischen einer Betriebsstellung und einer Transportstellung verschwenkbar gelagert ist;
**dadurch gekennzeichnet, dass** die äußeren Seitenteile (52, 54) in der Transportstellung rückwärtig der inneren Seitenteile (22, 24) angeordnet sind.

2. Erntevorsatz (12) nach Anspruch 1, wobei die äußeren Seitenteile (52, 54) gegenüber den inneren Seitenteilen (22, 24) in der Transportstellung gegenüber der Betriebsstellung um 90°, 180° oder einem dazwischen liegenden Winkel um die Achse (68, 70) gedreht sind.

3. Erntevorsatz (12) nach Anspruch 1 oder 2, wobei die inneren Seitenteile (22, 24) gegenüber dem Mittelteil (20) in der Transportstellung gegenüber der Betriebsstellung um 180° um die Achse (46, 48) gedreht sind.

4. Erntevorsatz (12) nach einem der Ansprüche 1 bis 3, wobei die Erntegutaufnahmeeinrichtungen (38, 40, 42, 56, 58) Reiheneinheiten eines Maispflückers sind.

5. Erntemaschine (10) mit einem Erntevorsatz nach einem der vorhergehenden Ansprüche.

## Geänderte Patentansprüche

### Geänderte Patentansprüche gemäss Regel 137(2) EPÜ.

1. Erntevorsatz (12) für eine selbstfahrende Erntemaschine (10), umfassend:
einen Mittelteil (20) mit einem Rahmen (32), an dem mindestens eine Erntegutaufnahmeeinrichtung (40) befestigt ist und der an einem Einzugsförderer (18) einer selbstfahrenden Erntemaschine (10) anbringbar und in einer Vorwärtsbewegungsrichtung (V) über ein Feld bewegbar ist,
an beiden Seiten des Mittelteils (20) angeordnete, innere Seitenteile (22, 24) mit jeweils einem Rahmen (34, 36), an dem je mindestens eine Erntegutaufnahmeeinrichtung (38, 42) befestigt ist und der am Rahmen (32) des Mittelteils (20) um eine sich in Vorwärtsrichtung (V) erstreckende Achse (46, 48) zwischen einer horizontalen Betriebsstellung und einer angehobenen Transportstellung verschwenkbar gelagert ist, und
jeweils an beiden Seiten der inneren Seitenteile (22, 24) angeordnete, äußere Seitenteile (52, 54) mit jeweils einem Rahmen (64, 66), an dem mindestens eine Erntegutaufnahmeeinrichtung (56, 58) befestigt ist und der am Rahmen (34, 36) des inneren Seitenteils (22, 24) um eine sich in der Betriebsstellung vertikal erstreckende Achse (68, 70) zwischen einer Betriebsstellung und einer Transportstellung verschwenkbar gelagert ist; in welcher die äußeren Seitenteile (52, 54) rückwärtig der inneren Seitenteile (22, 24) angeordnet sind,
**dadurch gekennzeichnet, dass** die inneren Seitenteile (22, 24) gegenüber dem Mittelteil (20) in der Transportstellung gegenüber der Betriebsstellung um 180° um die sich in Vorwärtsrichtung (V) erstreckende Achse (46, 48) gedreht sind.

2. Erntevorsatz (12) nach Anspruch 1, wobei die äußeren Seitenteile (52, 54) gegenüber den inneren Seitenteilen (22, 24) in der Transportstellung gegenüber der Betriebsstellung um 90°, 180° oder einem dazwischen liegenden Winkel um die sich in der Betriebsstellung vertikal erstreckende Achse (68, 70) gedreht sind.

3. Erntevorsatz (12) nach einem der Ansprüche 1 oder 2, wobei die Erntegutaufnahmeeinrichtungen (38, 40, 42, 56, 58) Reiheneinheiten eines Maispflückers sind.

4. Erntemaschine (10) mit einem Erntevorsatz nach einem der vorhergehenden Ansprüche.
